**Europäisches Patentamt**

**European Patent Office**

**Office européen des brevets**

(11) Veröffentlichungsnummer: **0 258 488 B1**

# EUROPÄISCHE PATENTSCHRIFT

(45) Veröffentlichungstag der Patentschrift: **24.04.91**

(51) Int. Cl.⁵: **G03B** 27/46, G06K 1/12

(21) Anmeldenummer: 86112320.6

(22) Anmeldetag: 05.09.86

(54) **Vorrichtung und Verfahren zur Verfilmung von Dokumenten.**

(43) Veröffentlichungstag der Anmeldung:
**09.03.88 Patentblatt 88/10**

(45) Bekanntmachung des Hinweises auf die Patenterteilung:
**24.04.91 Patentblatt 91/17**

(84) Benannte Vertragsstaaten:
**AT BE CH DE FR GB IT LI NL SE**

(56) Entgegenhaltungen:
**EP-A- 0 096 388**
**EP-A- 0 154 658**
**DE-A- 3 112 494**
**US-A- 4 283 621**

**Zeichnungsvervielfältigung auf der Hannover Messe 83, U. Kühn, V.I.T. 1/2 1983, Seite 58**

(73) Patentinhaber: **Staude Foto Chemie Eva Staude**
**Södeler Weg 2**
**W-6366 Wölfersheim(DE)**

(72) Erfinder: **Staude, Eckhard**
**Beundestrasse 6**
**W-6366 Wölfersheim(DE)**
Erfinder: **Kaus, Jürgen**
**Weinbergstrasse 9**
**W-6366 Wölfersheim(DE)**

(74) Vertreter: **Linser, Heinz**
**Patentanwälte Heinz Linser Dipl. Ing. Eckhardt Eyer Robert-Bosch-Strasse 12a Postfach 10 22 10**
**W-6072 Dreieich(DE)**

## Beschreibung

Die Erfindung betrifft ein Verfahren zur Verfilmung von Dokumenten auf Planfilm, insbesondere zur Mikroplanverfilmung, Ermittlung und Speicherung ihrer Filmpositionsdaten und Auswertung dieser Daten zur Reproduktion des Dokuments aus dem Mikroplanfilm.

Die Erfindung betrifft ferner eine Vorrichtung zur Durchführung des Verfahrens zur Verfilmung von Dokumenten, Ermittlung, Speicherung und Auswertung ihrer Filmpositionsdaten sowie zur Reproduktion des Dokuments, mit Hilfe einer Einrichtung zur automatischen Mikroverfilmung aus einer rechnergesteuerten Kombination folgender Systeme;

a) eine Einrichtung zum automatischen Dokumenteneinzug und -Transport durch eine Beleuchtungsvorrichtung aus einem eingegebenen Stapel von Dokumenten eines bestimmten Formates, mit einer Formatverstellvorrichtung;

b) eine Kamera mit Wechselobjektiv, mit einem Beleuchtungs- und Spiegelsystem zur gleichzeitigen Aufnahme der Vor- und Rückseite des Dokuments, und mit einem automatischen Filmtransport;

c) eine weitere Kamera mit Belichtungssystem zur Titel- und fortlaufenden Kennzeichnungsverfilmung;

d) eine automatische Filmentwicklungsvorrichtung; und

e) ein zentrales Steuer- und Kontrollsystem der Kamera mit einer Eingabetastatur und einem Monitor.

Die Erfindung betrifft ferner die Kombination eines Rechners mit einem Retrievalgerät, einer Kamera oder eines Projektors zum schnellen Auffinden und zur Reproduktion eines Dokuments aus einem Planfilm.

Zur Sicherung von Dokumenten jeglicher Art und/oder zur raumsparenden Erfassung und Wiedergabe von Literaturstellen ist die Mikroverfilmung als ein hervorragendes Mittel besonders geeignet und wird daher von den verschiedensten Anwendern, wie beispielsweise den Banken, Bibliotheken, Industriefirmen, Instituten und Patentämtern intensiv im In- und Ausland benutzt.

Zur Mikroverfilmung sind Kameras bekannt, mit deren Hilfe die zu verfilmenden Dokumente von Hand einzeln aufgenommen werden. Nach der Belichtung eines Planfilmes oder Fiches schließt sich getrennt davon und mit einer besonderen Kamera oder mit spezifischen Hilfsmitteln die Verfilmung des Titels und der Kennzeichnung an. Die Zählung der einzelnen Planfilme einer Serie erfolgt durch den Bearbeiter, der zur Aufnahme der Seriennummer und/oder des Datums auf den Planfilm ein entsprechendes Bild fertigen und verfilmen muß.

Nach Durchführung solcher Arbeiten wird der Planfilm einer an sich bekannten automatisch arbeitenden Entwicklungsvorrichtung zugeführt, welche den belichteten Film entwickelt und getrocknet abgibt.

Sehr viele Anwender der Mikrofilmtechnik müssen große Dokumentenmengen, welche oftmals unterschiedliche Formate aufweisen, in möglichst kurzer Zeit mit ihrer Vor- und Rückseite aufnehmen, und zwar zusammen mit bestimmten Kennzeichnungen, welche selbst nicht auf den Dokumenten vorhanden sind, wie beispielsweise Registriernummern, Firmenkennzeichnungen und dergl..

Derartige Arbeiten sind mit den zur Zeit bekannten Geräten sehr personalaufwendig und beanspruchen sehr viel Zeit. Darüberhinaus sind sehr leicht Fehlkennzeichnungen möglich, so daß die gesamte Verfilmung von beispielsweise 94 Dokumenten wiederholt werden muß.

Aus der EP-A- 154 658 ist eine Vorrichtung des Erfinders zur Mikroverfilmung und Entwicklung bekannt, mit deren Hilfe eine automatische Verfilmung einer großen Anzahl von Dokumenten möglich ist, wobei nach Wahl gleichzeitig die Vor- und Rückseite eines Dokumentes aufgenommen werden kann, die Zählung automatisch erfolgt und in der gleichen Kamera sowohl die Verfilmung des Titels, eines Firmenzeichens und einer laufenden und damit veränderbaren Kennzeichnung, wie beispielsweise des Datums, im gleichen Arbeitsgang wie die Verfilmung der Dokumente, d.h. im Durchlaufverfahren erfolgt, wobei jedoch der Titel selbst als Standbild aufgenommen wird.

Bei dieser bekannten Vorrichtung ist eine Verfilmung im Durchlaufoder Durchflußverfahren und durch Umschaltung bzw. durch Austausch weniger Bauelemente auch im Standbildverfahren in einfacher Weise möglich. Eine solche Vorrichtung findet bei der vorliegenden Erfindung Anwendung.

Der vorliegenden Erfindung liegt die Aufgabe zugrunde, einen Datenspeicher für zu verfilmende Dokumente in einfacher, sicherer und reproduzierbarer Weise zu erstellen, wobei der Speicher dokumentspezifische Daten als Suchbegriffe sowie Film- und Positionsdaten des Dokuments auf dem zu erstellenden Mikrofilm enthält, und die Positionsdaten darüberhinaus zur Ansteuerung von Retrievalgeräten, automatischen Kameras oder Projektoren einsetzbar sind.

Aus der DE-PS 3 0 977 (EP-A- 96 388) ist eine Vorrichtung und ein Verfahren zur Verfilmung von Belegen in ungeordneter Reihenfolge bekannt, bei dem die Dokumente paginiert und anschließend unter Zuordnung eines Blip-Impulscodes verfilmt werden.

Ein derartiges Verfahren eignet sich nur für die Verwendung von Rollfilmen, wobei noch der Nachteil vorhanden ist, daß der zu verfilmende Blip-Impulscode eines jeden Bildes zur Ermittlung der Position des Bildes bzw. des verfilmten Dokumentes auf dem Film mittels einer Zählvorrichtung optisch gelesen und gezählt werden muß. Hierdurch liegen nur relative und keine absoluten Such- oder Positionsmerkmale vor.

Dies bedeutet, daß jedes Bild eines Dokumentes mit dem gleichen Blip-Impulskode versehen ist, welches erst durch Aufsummierung ermittelt und verwertbar ist, wobei sehr leicht Störungen, beispielsweise durch Staubpartikel oder Kratzer auf dem Film auftreten können. Derartige Fehler bewirken, daß nicht die gewünschten Bilder der Dokumente gefunden werden, sondern daß Reproduktionen von solchen Bildern hergestellt werden, welche nicht gewünscht wurden.

Ein weiterer Nachteil des bekannten Verfahrens ist darin zu sehen, daß das Dokument automatisch paginiert wird, wobei eine bestimmte Ziffernfolge an eine definierte und gleichbleibende Stelle auf dem Dokument aufgedruckt wird. Dadurch ist nicht ausgeschlossen, daß die Ziffern auf Bildelemente des Dokuments gelangen, so daß beim Lesen dieser Ziffern Fehler auftreten können. Ein solches Verfahren ist daher nicht für solche Anwendungen geeignet, bei denen große Mengen von Dokumenten unterschiedlicher Art und Größe anfallen, welche in einfacher und sicherer Weise zu dokumentieren und eindeutig zu reproduzieren sind.

Die Lösung der gestellten Aufgabe besteht daher darin, daß gemäß dem Verfahren nach der Erfindung die dokumentspezifischen Erkennungs- oder Suchdaten eines zu verfilmenden Dokuments einem Speicher eines Rechners eingegeben werden, daß der Rechner die Adresse dieses eröffneten Speicherplatzes in Form eines mit dem Dokument zu kennzeichnenden Code zur Identifikation des Dokuments und der Speicherplatzzuordnung weiterer dokumentspezifischer Daten ausgibt und unter dieser Adresse weiteren Datenspeicherplatz reserviert und daß bei der Verfilmung des Dokuments der Code gelesen wird und die über einen durch Schrittschaltmotoren gesteuerten Koordinatenschlitten der Kamera ermittelten Postionsdaten des Dokuments auf dem Planfilm in dem reservierten Speicherplatz des Rechners abgespeichert werden.

In Weiterbildung der Erfindung wird der dokumentspezifische Code als Strichcode von einem mit dem Rechner verbundenen Drucker auf ein Etikett gedruckt, welches mit dem Dokument an einer geeigneten Stelle verbunden wird.

Der mit dem zu verfilmenden Dokument maschinenlesbar verbundene Code wird automatisch gelesen oder eingegeben und einem Speicher der Kamera zugeführt, und diesem Speicher werden die von der Kamera bei der Verfilmung des Dokuments ermittelten Verfilmungsdaten zugeordnet, welche dann in den Speicher des Rechners übertragen werden, so daß dieser die Erkennungs- und Suchdaten des Dokuments aufweist.

Der dokumentspezifische Code und die unter dieser Speicherplatzadresse gespeicherten Positionsdaten des Dokuments auf dem Planfilm werden zur Ansteuerung den Schrittschaltmotoren eines Koordinatenschlittens, eines Retrievalgerätes, eines Projektors oder einer Kamera eingegeben, so daß eine Positionierung des Bildes eines zu reproduzierenden Dokuments erfolgt.

Zur Durchführung des Verfahrens nach der Erfindung ist die Einrichtung zur automatischen Mikroverfilmung über Schnittstellen mit einem weiteren externen oder internen Rechner verbunden, welcher einen Speicher zur Aufnahme von dokumentspezifischen Daten und eine Vorrichtung zur Ausgabe eines den Speicherplatz bzw. die Speicheradresse kennzeichnenden und mit dem Dokument maschinenlesbar verbundenen Code aufweist. Das zentrale Steuerund Kontrollsystem weist eine Einrichtung zum Lesen des Codes auf, welche diesen Code und die vom Steuer- und Kontrollsystem vergebenen Film- und Positionsdaten des fotografisch auf dem Mikrofilm aufgenommenen Dokuments dem Speicher des Rechners zuführt.

Die Ausgabevorrichtung des Rechners ist nach der Erfindung als Drucker ausgebildet, der einen auf ein Etikett aufdruckbaren, dokumentspezifischen Strichcode oder einen entsprechenden maschinenlesbaren Code ausgibt, welcher unmittelbar mit dem dazugehörigen Dokument verbindbar ist.

Der Einrichtung zum automatischen Dokumenteneinzug ist ein den auf dem zu fotografierenden Dokument befindlichen, die Speicheradresse des Rechners beinhaltenden Code lesender Leser zugeordnet und direkt oder über einen weiteren Speicher werden im Kontroll- und Steuersystem der Kamera, dem Rechner unter der Speicheradresse die über die Schrittschaltmotoren der Kamera ermittelten dokumentspezifischen Positionswerte übertragen.

Der Rechner ist über seine Schnittstelle mit einer Steuervorrichtung eines Retrievalgerätes, eines Projektors oder einer Kamera zur Reproduktion des Mikrobildes eines Dokumentes verbunden, wobei das Retrievalgerät, der Projektor oder die Kamera zur Positionierung des Planfilms einen durch ansteuerbare Schrittschaltmotoren betätigbaren Koordinatenschlitten aufweist.

Die weitere Kamera weist ein Objektiv und ein Belichtungssystem zur Titel- und Kennzeichnungsverfilmung sowie ein weiteres Objektiv zur Verfilmung des Bildes auf einem Monitor auf, wobei der Monitor einen Verschluß besitzt, und ein Schlitten fährt den belichteten Planfilm automatisch in die Titel- und Kennzeichnungsbildpostion.

Die Vorrichtung nach der Erfindung wird anhand der Zeichnungen näher erläutert. Hierbei zeigen:

FIGUR 1 ein Ablaufdiagramm der gesamten Vorrichtung, dargestellt als Blockschaltbild;

FIGUR 2 eine schematische Darstellung der automatischen Kameravorrichtung nach der Erfindung in Seitenansicht, und

FIGUR 3 eine Draufsicht auf die automatische Kameravorrichtung in schmatischer und zur Figur 2 geringfügig vergrößerter Darstellung.

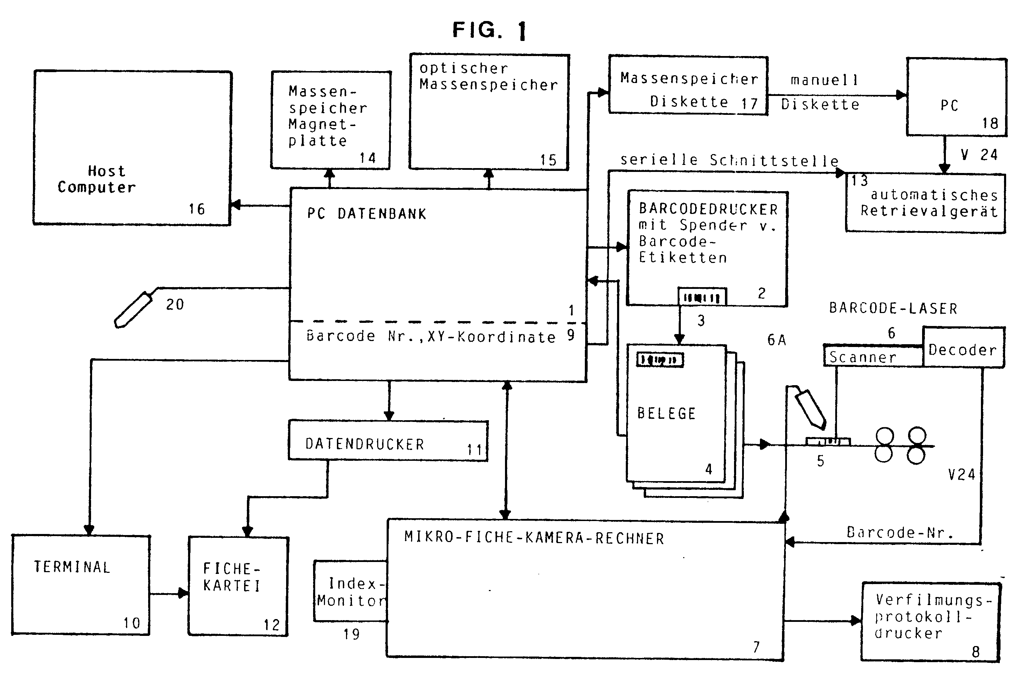

Das Ablaufdiagramm nach Figur 1 wird sogleich anhand des Verfahrensablaufes beschrieben.

Im Rechner 1, welcher als externer Rechner und als ein DatenbankPC (PC für Personalcomputer) ausgebildet ist, wird eine Datenbank angelegt, in der die Suchbegriffe und die sonstigen Daten der durch Mikroverfilmung zu speichernden Belege erfaßt werden. In dieser Datenbank stehen somit alle Daten zur Verfügung, um einen Beleg eindeutig zu identifizieren. Eine bestimmte Größe an Speicherplatz bleibt für die später hinzuzugebenden Verfilmungsdaten reserviert. Die Adresse dieses auf ein bestimmtes Dokument bezogenen Speichers wird durch einen Code dargestellt, der in Form eines Strich- oder Barcodes realisiert wird. Die Realisierung dieses Strich- oder Barcodes (als Identifizierungsnummer) kann dadurch erfolgen, daß

a) der Code durch den PC vergeben wird,

b) manuell über die PC-Tastatur oder mit Hilfe eines Barcode-Lesestiftes 20 eine Nummer, die gegebenenfalls bereits auf dem Beleg vorhanden ist, dem PC eingegeben wird, oder indem

c) eine fortlaufende Barcode-Nr. von einem auf einer Rolle befindlichen Barcode-Etikett abgenommen wird.

In den Fällen a) und b) druckt ein über eine Schnittstelle angeschlossener Barcode-Drucker 2 ein Barcode-Etikett 3 aus, welches an vorgeschriebener Position auf den Beleg 4 geklebt wird.

Die so erfaßten Belege können nun zu jeder Zeit auch ungeordnet oder unsortiert verfilmt werden.

Zur Mikrofichekamera gehört in der Darstellung des Ablaufdiagramms der Mikrofichekamera-Rechner 7, ein Lesestift 6A, ein als Scanner ausgebildetes Laserlesegerät 6 mit Dekoder und mit entsprechenden Schnittstellen V24.

Bei der Verfilmung mit der automatischen Mikrofichekamera liest der Scanner 6 während des automatisch erfolgenden Durchlaufs des zu verfilmenden Dokuments am Eingang 5 der Kamera den Strichcode und führt ihn dem Kamerarechner 7 über eine V24-Schnittstelle zu.

Liest der Scanner 6 den Strichcode während des Einlaufes des Dokumentes nicht, so wird dies angezeigt und der Code kann noch nach der Verfilmung mit dem Lese-Stift 6A gelesen werden.

Kann auch der Strichcode-Lesestift den Code nicht erfassen, so besteht ferner die Möglichkeit, diesen durch eine Tastatur der Kamera direkt einzugeben.

Besteht das Verfilmungsgut aus Haupt- und Unterbelegen, so werden die Hauptbelege in der Datenbank erfaßt und mit Barcode-Etiketten versehen. Bei der Verfilmung wird auch nur der Hauptbeleg erfaßt und die dazugehörigen Unterbelege nachgeordnet verfilmt.

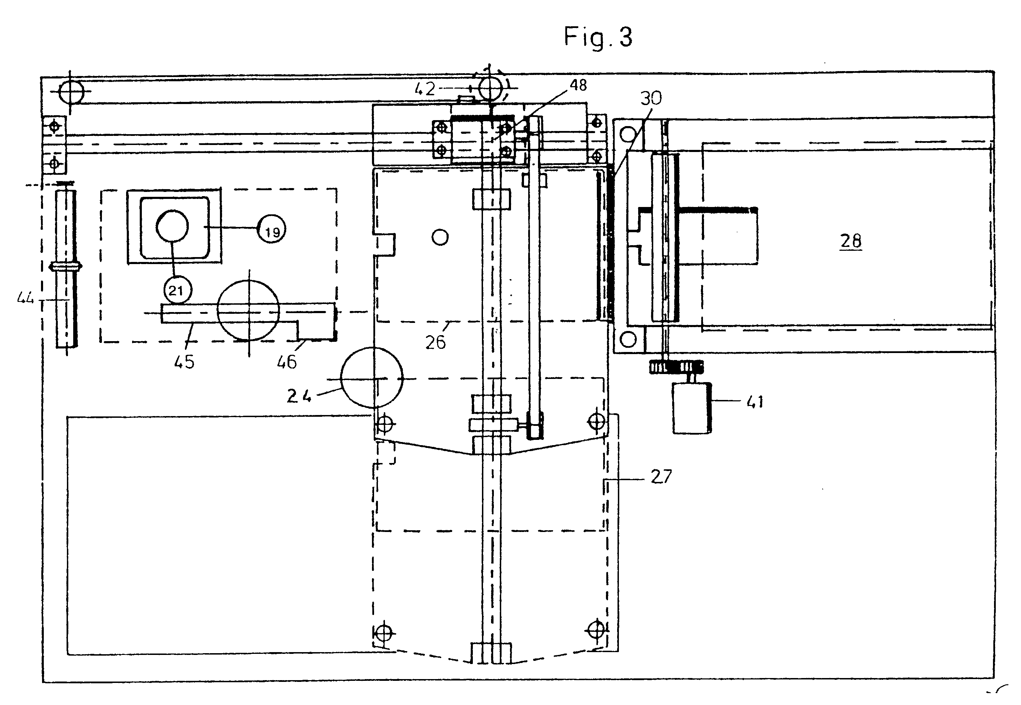

Es besteht nach der Erfindung ferner die Möglichkeit, die den Belegen zugeordneten Daten über einen zweiten Monitor 19 (s. hierzu auch Fig. 3) und mit einem zweiten Objektiv 21 in der Kamera auf speziell vorgesehenen Indexfeldern zu belichten.

Nachdem der Fiche belichtet ist, führt der Kamerarechner 7 die ihm bekannten neuen Verfilmungsdaten dem Speicher unter der entsprechenden Barcodenummer zu. Anschließend werden diese Verfilmungsdaten dem unter dem Code reservierten Speicherplatz 9 der Datenbank des PC 1 zugeordnet.

Der Kamera-Rechner 7 kann diese Daten zusätzlich auch über einen Drucker 8 als Verfilmungsprotokoll ausdrucken.

Der nun auf diese Weise vervollständigte Datensatz zeigt dem Sucher nach einem bestimmten Beleg nun auch die Verfilmungsdaten am Terminal 10 an. Er kann sich auch diese Daten über den Datendrucker 11 ausdrucken lassen und findet dann in der einfachsten Form in der Fiche-Kartei 12 oder über ein, mit einer seriellen Schnittstelle angeschlossenen automatisches Retrievalgerät 13, seinen Beleg auf dem Mikrofiche.

Ist die Speicherkapazität des PC auf der Festplatte 14 erschöpft, so können diese Daten weitergegeben werden an:

a) einen optischen Massenspeicher 15,

b) einen Großrechner (Host) 16 oder an

c) die im PC befindliche Diskette 17.

Die Verwendung einer Diskette 17 hat den Vorteil, daß diese Daten dezentral in einem anderen PC 18 gelesen werden können.

Dieser PC kann wiederum an einem automatischen Such- oder Retrievalgerät 13 angeschlossen sein oder der Sucher greift in die Fiche-Kartei 12, um seinen Beleg auf dem Mikrofiche zu finden.

Mit diesem Verfahren ist es möglich, Buchungsbelege in der EDV zu erfassen, ungeordnet und zeitlich verschoben auf Mikrofiche zu verfilmen und anschließend oder später mittels der EDV die Belege auf dem Mikrofiche in einfacher Weise und sicher wiederzufinden.

Die automatische Kamera besteht aus der Kombination mehrerer Einrichtungen, welche mit Hilfe des zentralen Rechners 7 überwacht und gesteuert werden. Für die Eingabe der Befehle und bestimmter Kennzeichnungen und Daten ist eine nicht näher dargestellte Eingabetastatur und zur visuellen Darstellung ein Monitor oder Terminal 10 vorgesehen.

Diese Vorrichtung setzt sich aus folgenden Einrichtungen zusammen, nämlich:

aus einer nicht näher dargestellten Einrichtung zum automatischen Dokumenteneinzug und -transport, einschließlich einer Beleuchtungsvorrichtung und einer Formatverstellvorrichtung;

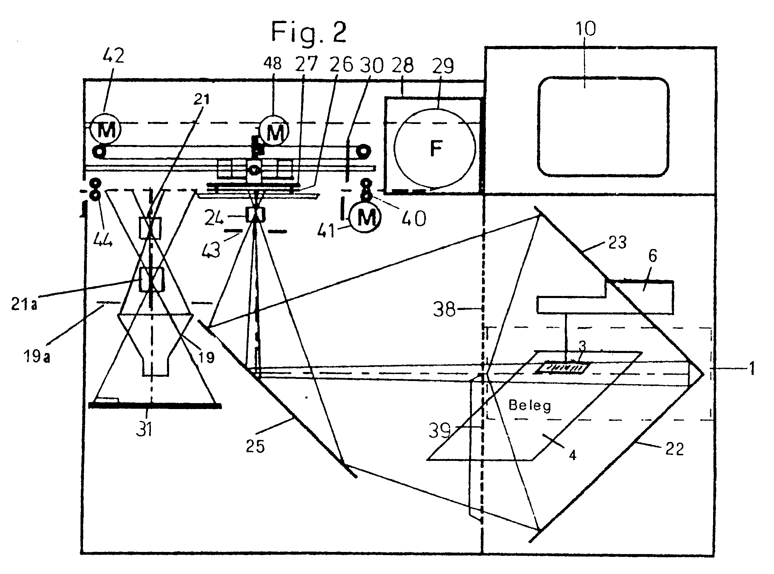

aus einer Wechselobjektivkamera gemäß Figur 2 mit Beleuchtungs- und Spiegelsystem 22, 23, 25 zur gleichzeitigen Aufnahme der Vor- und Rückseite des Dokumentes, und mit einem automatischen Filmtransport;

aus einer Kamera mit Belichtungssystem zur Titel- und fortlaufenden Kennzeichnungsverfilmung, und einer nicht näher dargestellten automatischen Flmentwicklungsvorrichtung.

Die automatische Kamera nach den Figuren 2 und 3 enthält eine Filmkassette 28 mit einer Filmrolle 29 und eine sich anschließende automatisch betätigbare Schneidevorrichtung 30, vor der der Schlitten 27 den so erzeugten Planfilm mit Hilfe einer Ansaugvorrichtung übernimmt und der jeweiligen Bildposition zuführt und im Fließbildaufnahmeverfahren, synchron zur Bewegung des beleuchteten Dokumentes durchfährt, oder im Standbildverfahren während der Belichtungszeit in der jeweiligen Bildposition verbleibt.

Zur Halterung des Planfilmes ist der Schlitten 27 mit einer Unterdruckvorrichtung ausgerüstet.

Der Bewegungsablauf des Schlittens 27 zur Zuordnung der Bilder auf dem Planfilm erfolgt in einem vorgegebenen und je nach Dokumentengröße änderbaren Raster mit Hilfe der Prozessorsteuerung.

Der oberhalb einer Beleuchtungsebene liegende Spiegel 23 reflektiert die Vorderseite und der unterhalb der Beleuchtungsebene liegende Spiegel 22 die Rückseite des Dokuments 4 auf den Spiegel 25, der zur Beleuchtungsebene eine Neigung von 135° aufweist. Zwischen den Spiegeln 22, 23 und 25 sind Aufnahmeschlitze 38 und 39 angeordnet. Der Schlitz 39 wird dann geschlossen, wenn die Rückseite eines Dokuments nicht aufgenommen werden soll, um das Eintreten von Nebenlicht zu verhindern.

Das gleiche optische System kann auch für Standbildaufnahmen verwendet werden. Hierzu ist es lediglich erforderlich, die Spiegel so zu vergrößern, daß das gesamte Dokument zu einem Zeitpunkt erfaßt wird, da das Dokument und der Planfilm im Moment der Aufnahme stehen bleiben müssen.

Im Aufnahmeteil der Wechselobjektiv-Kamera ist eine lichtdichte Filmkassette 29 vorhanden, welche einen 105 mm breiten und 30,5 m langen panchromatischen, hochauflösenden Mikrofilm enthält. Der unbelichtete Film wird mit Hilfe der von einem Motor 41 angetriebenen Transportwalzen 40 so weit aus der Filmkassette gezogen, bis zwischen einer Lichtschranke und der Schneidevorrichtung 30 ein Abstand von 148 mm erreicht ist. Sodann wird der Film auf diese vorgeschriebene Länge geschnitten. Die Schneidevorrichtung 30 ist als ein Fallmesser ausgebildet, welches zur Schnittebene schräg verläuft.

Der XY-Schlitten 27, der von dem Motor 48 Y-Richtung und von dem Motor 42 in X-Richtung angetrieben wird, fährt über den abgeschnittenen DIN A6 Fiche oder Planfilm und saugt diesen mittels eines durch eine Vakuumpumpe erzeugten Unterdruckes an. Der Film liegt dabei absolut plan unter dem Schlitten 27.

Alle Funktionen des Aufnahmeteils und die Bewegungsschritte, die der XY-Schlitten durchführen muß, damit die Belichtungen an den definierten Stellen des Planfilms erfolgen können, werden von dem Rechner 7 der Kamera entsprechend der verwendeten Optik und der verwendeten Formate sowie der Rasterung gesteuert. Der DIN A6 Film kann daher mit den unterschiedlichsten Rastern belichtet werden, und zwar in Abhängigkeit von dem Verkleinerungsfaktor und der Größe des Dokumentes. Die Rasterung bestimmt auch die Aufnahmezahl pro Planfilm.

Die Position eines jeden einzelnen Bildes ward numerisch oder alphanumerisch erfaßt und durch den Rechner entsprechend dem Code des Dokumentes festgehalten. Die vorliegende Kamera ist hinsichtlich ihrer Programmierung derartig ausgelegt, daß sie die Dokumente in die von der DIN vorgeschriebenen Raster belichtet. Die Positionierungen der einzelnen Dokumente können auch als Codierung auf dem Planfilm und/oder auf besonderen Datenträgern, wie oben ausgeführt, festgehalten werden, so daß diese Werte von den nachfolgenden Lesegeräten zum Auffinden der spezifischen Dokumente verwendet werden können. Grundsätzlich lassen sich alle denkbaren Rasterungen verwenden, da dies nur eine Frage der Programmierung ist.

Im Gegensatz zu einer bekannten Schrittschaltkamera läuft der XY-Schlitten mit dem Film, sobald das Dokument in die Aufnahmeund Beleuchtungsebene eintritt, kontinuierlich, gegenläufig und synchron in dem vom Verkleinerungsfaktor bestimmten Verhältnis ab, bis der vom Raster bestimmte Bildstrich erreicht ist. Die gegenläufige Bewegung erfolgt durch die bildumkehrende Wirkung der Optik.

Sobald auf der Y-Achse des Planfilmes alle Aufnahmen belichtet sind, rückt der Schlitten auf der X-Achse beim Simplex-Verfahren, d.h. bei Belichtung nur einer Seite des Dokuments, in die nächste Spalte oder im Duplex-Verfahren, d.h. bei Belichtung der Vorund Rückseite des Dokumentes, in die übernächste Spalte. Gleichzeitig fährt der Y-Motor den XY-Schlitten wieder in die Anfangsposition der Aufnahmespalte des Planfilms.

Ist der gesamte Planfilm belichtet oder die für diesen Planfilm bestimmte Charge der Dokumente abgeschlossen, so fährt der XY-Schlitten in die nachfolgende und integrierte Kamera, welche sich der Wechselobjektivkamera unmittelbar mit einem eigenen Belichtungssystem zur Titel- und Kennzeichnungsverfilmung anschließt. Auch dieser Bewegungsvorgang des XY-Schlittens mit dem belichteten Planfilm erfolgt vollautomatisch durch die Steuerung des Rechners 7.

Unterhalb der Optik 24, d.h. in ihrem Strahleneingang befindet sich ein Hilfsverschluß 43, welcher den Film vor Fremdlicht während des Stillstandes beim Bildstrich, während des Rücklaufes, d.h. beim sogenannten Spaltensprung und während die Kamera ausgeschaltet ist, schützt.

Das nachfolgende Objektiv 21a zur Kennzeichnungsverfilmung dient zur Aufnahme einer Anzeige 31, welche in der Objektebene des Objektivs liegt. Dieses Objektiv zur Kennzeichnungsverfilmung ist mit einer elektronisch gesteuerten Dia-Einlege- und Durch-leuchtungsvorrichtung versehen.

Die Anzeige 31, kann mehrzeilig ausgebildet sein oder der Bewegungsablauf des XY-Schlittens 27 ist bei einer einzeiligen Anzeige mit einem Zeilensprung zur hintereinander erfolgenden Aufnahme der Zeile programmiert.

Die Beschriftung der Anzeige 31 erfolgt mit Hilfe einer nicht näher dargestellten Tastatur oder automatisch, beispielsweise bei einer fortlaufenden Zählung oder bei der Datumseingabe, falls dies gewünscht ward. Für die Titeleingabe ist auf dem Planfilm ein bestimmtes Feld vorgesehen, sodaß bei den üblichen Normen ein entsprechender Titelschlitz 45 vorgesehen ist.

Während die elektronische Anzeige durch den Monitor 19 selbstleuchtend ausgebildet ist, ist es erforderlich für die Verfilmung eines Dia eine Durchleuchtungsvorrichtung vorzusehen. Ein besonderer Dia-Schlitz 46 sorgt für die richtige Feldzuordnung auf dem Planfilm.

Der Kamera nach Figur 2 schließt sich unmittelbar eine Planfilmübergabevorrichtung 44 an, welche den fertig belichteten Planfilm dem XY-Schlitten entnimmt und ihn einer nicht näher dargestellten Entwicklungsstation zuführt.

Zum Rechner oder Computer 7 der Kamera ist eine Tastatur und der Monitor 19 zu zählen. Der Computer übernimmt alle Steuerund Regelfunktionen sowie Funktionsüberwachungen und zeigt die wichtigsten Funktionen, je nach Programmierung, auf dem Monitor 10 an.

Von besonderer Bedeutung ist die Anzeige des Rasters in Form einer Schablone, wobei jede belichtete Aufnahme in dem entsprechenden Feld bezeichnet wird. Die Bedienungsperson kann daher zu jedem Zeitpunkt erkennen, welches Feld im Raster gerade belichtet wurde und welche Felder noch frei sind.

## Ansprüche

1. Verfahren zur Verfilmung von Dokumenten auf Planfilm, insbesondere zur Mikroplanverfilmung, Ermittlung und Speicherung ihrer Filmpositionsdaten und Auswertung dieser Daten zur Reproduktion des Dokuments aus dem Mikroplanfilm, dadurch gekennzeichnet, daß die dokumentspezifischen Erkennungsoder Suchdaten eines zu verfilmenden Dokuments einem Speicher eines Rechners eingegeben werden, daß der Rechner die Adresse dieses eröffneten Speicherplatzes in Form eines mit dem Dokument zu kennzeichnenden Code zur Identifikation des Dokuments und der Speicherplatzzuordnung weiterer dokumentspezifischer Daten ausgibt und unter dieser Adresse weiteren Datenspeicherplatz reserviert und daß bei der Verfilmung des Dokuments der Code gelesen wird und die über einen durch Schrittschaltmotoren gesteuerten Koordinatenschlitten der Kamera ermittelten Positionsdaten des Dokuments auf dem Planfilm in dem reservierten Speicherplatz des Rechners abgespeichert werden.

2. Verfahren nach Anspruch 1, dadurch gekennzeichnet, daß der dokumentspezifische Code als Strichcode von einem mit dem Rechner verbundenen Drucker auf ein Etikett gedruckt wird, welches mit dem Dokument maschinenlesbar verbunden wird.

3. Verfahren nach Anspruch 1 oder 2, dadurch gekennzeichnet, daß der mit dem zu verfilmenden Dokument maschinenlesbar verbundene Code automatisch gelesen oder eingegeben und einem Speicher der Kamera zugeführt wird, und daß diesem Speicher die von der Kamera bei der Verfilmung des Dokuments ermittelten Verfilmungsdaten zugeordnet werden, welche dann in den Speicher des Rechners übertragen werden, so daß dieser die Erkennungs- und Suchdaten des Dokuments aufweist.

4. Verfahren nach Anspruch 1, 2 oder 3, dadurch gekennzeichnet, daß der dokumentspezifische Code und die unter dieser Speicherplatzadresse gespeicherten Positionsdaten des Dokuments auf dem Planfilm zur Ansteuerung der Schrittschaltmotoren eines Koordinatenschlittens in einem Retrievalgerät, einem Projektor oder in einer Kamera eingegeben werden, so daß eine Positionierung des Bildes eines zu reproduzierenden Dokuments erfolgt.

5. Vorrichtung zur Durchführung des Verfahrens nach einem der Ansprüche 1 bis 4 zur Verfilmung von Dokumenten, Ermittlung, Speicherung und Auswertung ihrer Filmpositionsdaten sowie zur Reproduktion des Dokuments, mit Hilfe einer Einrichtung zur automatischen Mikroverfilmung aus einer rechnergesteuerten Kombination folgender Systeme;
   a) eine Einrichtung zum automatischen Dokumenteneinzug und -Transport durch eine Beleuchtungsvorrichtung aus einem eingegebenen Stapel von Dokumenten eines bestimmten Formates, mit einer Formatverstellvorrichtung;
   b) eine Kamera mit Wechselobjektiv, mit einem Beleuchtungs- und Spiegelsystem zur gleichzeitigen Aufnahme der Vor und Rückseite des Dokuments, und mit einem automatischen Filmtransport;
   c) eine weitere Kamera mit Belichtungssystem zur Titel und fortlaufenden Kennzeichnungsverfilmung;
   d) eine automatische Filmentwicklungsvorrichtung; und
   e) ein zentrales Steuer- und Kontrollsystem der Kamera mit einer Eingabetastatur und einem Monitor, dadurch gekennzeichnet, daß die Einrichtung zur automatischen Mikroverfilmung über Schnittstellen mit einem weiteren externen oder internen Rechner (1) verbunden ist, welcher einen Speicher (9) zur Aufnahme von dokumentspezifischen Daten und eine Vorrichtung (2,3) zur Ausgabe eines den Speicherplatz bzw. die Speicheradresse kennzeichnenden und mit dem Dokument maschinenlesbar verbundenen Code aufweist, daß das zentrale Steuer- und Kontrollsystem (7) eine Einrichtung (6,6A) zum Lesen des Codes aufweist, welche diesen Code und die vom Steuer- und Kontrollsystem (7) vergebenen Film- und Positionsdaten des fotografisch auf dem Mikrofilm aufgenommenen Dokuments (4) dem Speicher (9) des Rechners zuführt.

6. Vorrichtung nach Anspruch 5, dadurch gekennzeichnet, daß die Ausgabevorrichtung des Rechners (1) als Drucker (2) ausgebildet ist, der einen auf ein Etikett aufdruckbaren, dokumentspezifischen Strichcode (3) oder einen entsprechenden maschinenlesbaren Code ausgibt, welcher unmittelbar mit dem dazugehörigen Dokument (4) verbindbar ist.

7. Vorrichtung nach Anspruch 5 oder 6, dadurch gekennzeichnet, daß der Einrichtung zum automatischen Dokumenteneinzug ein den auf dem zu fotografierenden Dokument befindlichen, die Speicheradresse des Rechners beinhaltenden Code (3) lesender Leser (6) zugeordnet ist und daß direkt oder über einen weiteren Speicher im Kontroll- und Steuersystem (7) der Kamera, dem Rechner (1) unter der Speicheradresse die über die Schrittschaltmotoren der Kamera ermittelten dokumentspezifischen Positionswerte übertragen werden.

8. Vorrichtung nach Anspruch 5,6 oder 7, dadurch gekennzeichnet, daß der Rechner über eine Schnittstelle mit einer Steuervorrichtung eines Retrievalgerätes (13), eines Projektors oder einer Kamera zur Reproduktion des Mikrobildes eines Dokuments verbunden ist, wobei das Retrievalgerät, der Projektor oder die Kamera zur Positionierung des Planfilms einen durch ansteuerbare Schrittschaltmotoren betätigbaren Koordinatenschlitten aufweist.

9. Vorrichtung nach Anspruch 5,6,7 oder 9 dadurch gekennzeichnet, daß die weitere Kamera ein Objektiv (21a) und ein Belichtungssystem zur Titel- und Kennzeichnungsverfilmung sowie ein weiteres Objektiv (21) zur Verfilmung des Bildes auf einem Monitor (19) aufweist, wobei der Monitor (19) einen Verschluß (19a) aufweist, und daß ein Schlitten (27) den belichteten Planfilm automatisch in die Titel- und Kennzeichnungsbildposition fährt.

## Claims

1. Method of filming documents on sheet film, in particular microfilming on sheet film, determining and storing their film position data and evaluating this data to reproduce the document from the sheet microfilm, characterised in that the document-specific recognition or search data of a document to be filmed is fed into a memory of a computer, in that the computer puts out the address of this opened memory space in the form of a code to be marked with the document to identify the document and storage space assignment of further document-specific data and reserves further data memory space under this address, and in that the code is read when the document is filmed, and the position data of the document on the sheet film, determined by means of a co-ordinate carriage of the camera controlled by stepper motors is stored in the reserved memory space of the computer.

2. Method as in claim 1, characterised in that the document-specific code is printed as a bar code by a printer linked to the computer on a label which is linked to the document in a machine-readable manner.

3. Method as in claim 1 or 2, characterised in that the code linked to the document to be filmed in a machine-readable manner is automatically read or entered and fed to a memory of the camera, and in that the filming data determined by the camera when the document is filmed is assigned to this memory and then transmitted to the memory of the computer so that the latter exhibits the recognition and search data of the document.

4. Method as in claim 1, 2 or 3, characterised in that the document-specific code and the position data of the document on the sheet film stored under this memory space address is entered to actuate the stepper motors of a co-ordinate carriage in a retrieval device, a projector or in a camera so that positioning of the image of a document to be reproduced takes place.

5. Device for implementing the method as in one of claims 1 to 4 for filming documents, determining, storing and evaluating their film position data and for reproducing the document, with the aid of an arrangement for automatic microfilming comprising a computer-controlled combination of the following systems:
   a) an arrangement for automatically drawing in and transporting a document through a lighting device from a loaded stack of documents of a particular size, with a size adjusting device;
   b) a camera with an interchangeable lens, with a lighting and mirror system for simultaneously recording the front and the back of the document, and with an automatic film transport system;
   c) a further camera with an exposure system for title and continuous marking filming;
   d) an automatic film developing device, and
   e) a central control and monitoring system of the camera with an input keyboard and a monitor, characterised in that the arrangement for automatic microfilming is linked by means of interfaces to a further external or internal computer (1) which exhibits a memory (9) for recording document-specific data and a device (2, 3) for putting out a code marking the memory space or the memory address and linked to the document in a machine-readable manner, in that the central control and monitoring system (7) exhibits an arrangement (6, 6A) for reading the code which feeds this code and the film and position data of the document (4) recorded photographically on the microfilm defined by the control and monitoring system (7) to the memory (9) of the computer.

6. Device as in claim 5, characterised in that the output device of the computer (1) is constituted by a printer (2) which puts out a document-specific bar code (3) which can be printed on a label or a corresponding machine-readable code which is linked directly to the associated document (4).

7. Device as in claim 5 to 6, characterised in that a reader (6) reading the code (3) to be found on the document to be photographed and containing the memory address of the computer is assigned to the arrangement for automatically drawing in a document, and in that the document-specific position data determined by means of the stepper motors of the camera is transmitted directly or via a further memory in the control and monitoring system (7) of the camera to the computer (1) under the memory address.

8. Device as in claim 5, 6 or 7, characterised in that the computer is linked by means of an interface to a control device of a retrieval device (13), a projector or a camera for reproducing the micro image of a document, and the retrieval device, the projector or the camera exhibits a co-ordinate carriage operable by actuatable stepper motors to position the sheet film.

9. Device as in claim 5, 6, 7 or 8, characterised in that the further camera exhibits a lens (21a) and an exposure system for title and marking filming and a further lens (21) for filming the image on a monitor (19), and the monitor (19) exhibits a shutter (19a), and in that a carriage (27) automatically moves the exposed sheet film into the title and marking image position.

## Revendications

1. Procédé de filmage de documents sur pellicule rigide, en particulier de filmage sur microfiche, de détermination et de stockage des données de positionnement sur la pellicule rigide, et d'interprétation de ces données en vue de la reproduction de documents à partir de la microfiche, caractérisé en ce que les données d'identification ou de recherche spécifiques à un document à filmer sont entrées dans une mémoire d'un ordinateur, l'ordinateur fournit l'adresse de cette zone ouverte de la mémoire sous la forme d'un code caractéristique du document pour identifier le document et l'agencement des positions de mémoire d'autres données spécifiques au document, et réserve sous cette adresse une autre zone de mémoire pour des données et, lors du filmage du document, le code est lu, et les données de position du document sur la pellicule rigide, fournies par un chariot de coordonnées de l'appareil photographique commandé par des moteurs pas à pas, sont stockées dans la zone de mémoire réservée de l'ordinateur.

2. Procédé selon la revendication 1, caractérisé en ce que le code spécifique au document est imprimé sous la forme d'un code à barres, par une imprimante connectée à l'ordinateur, sur une étiquette qui est liée au document de manière à pouvoir être lue sur machine.

3. Procédé selon la revendication 1 ou 2, caractérisé en ce que le code, lié au document à filmer de manière à pouvoir être lu sur machine, est lu ou entré automatiquement et acheminé à une mémoire de l'appareil photographique, et à cette mémoire sont affectées les données de filmage fournies par l'appareil photographique lors du filmage du document, lesquelles données sont transmises à la mémoire de l'ordinateur afin que celle-ci contienne les données d'identification et de recherche du document.

4. Procédé selon la revendication 1, 2 ou 3, caractérisé en ce que le code spécifique au document et les données de position du document sur la pellicule rigide, stockées à cette adresse de zone de mémoire, sont fournies, à un appareil d'interrogation, un projecteur ou un appareil photographique, pour commander les moteurs pas à pas d'un chariot de coordonnées de telle sorte qu'il se produise un positionnement de l'image d'un document à reproduire.

5. Dispositif de réalisation du procédé selon l'une des revendications 1 à 4 pour le filmage de documents, la communication, le stockage et l'évaluation de leurs données de position sur la pellicule rigide, ainsi que pour la reproduction du document à l'aide d'un dispositif permettant de filmer automatiquement sur microfiche à partir d'une combinaison, commandée par ordinateur, des systèmes suivants:

a) un dispositif d'introduction et de transport automatiques de documents à travers un dispositif d'illumination à partir d'un lot de documents introduits, d'un format déterminé, avec un dispositif de formatage;

b) un appareil photographique doté d'un objectif interchangeable avec un système d'illumination et de réflexion pour la saisie simultanée du recto et du verso du document, et d'un transport automatique de pellicule;

c) un autre appareil photographique doté d'un système d'illumination pour le filmage d'identification à l'arrêt et en continu;

d) un dispositif de développement automatique de pellicule; et

e) un système de commande et de contrôle central de l'appareil photographique doté d'un clavier d'entrée et d'un moniteur, caractérisé en ce que le dispositif de microfilmage automatique est lié via des interfaces à un autre ordinateur externe ou interne (1), qui comporte une mémoire (9) pour recevoir des données spécifiques au document, et un dispositif (2,3) pour éditer un code identifiant la position de mémoire ou l'adresse de mémoire et lié au document de manière à être lisible en machine, le système de commande et de contrôle central (7) présente un dispositif (6, 6A) pour la lecture du code, qui achemine ce code, et les données concernant la pellicule et la position attribuées par le système de commande et de contrôle (7) au document (4) enregistré photographiquement sur la microfiche, à la mémoire (9) de l'ordinateur.

6. Dispositif selon la revendication 5, caractérisé en ce que le dispositif d'édition de l'ordinateur (1) se présente sous la forme d'une imprimante (2) qui édite un code à barres (3) spécifique au document et imprimable sur une étiquette, ou un code correspondant lisible en machine, qui est lié directement au document (4) correspondant.

7. Dispositif selon la revendication 5 ou 6, caractérisé en ce qu'au dispositif d'alimentation automatique de documents, est affecté un lecteur (6) qui lit le code (3) qui se trouve sur le document à photographier et qui contient l'adresse de mémoire de l'ordinateur, et les valeurs de positions spécifiques aux documents fournis par les moteurs pas à pas de l'appareil photographique sont transmises à l'ordinateur (1) directement ou via une autre mémoire du système de commande et de contrôle (7) de l'appareil photographique.

8. Dispositif selon la revendication 5, 6 ou 7, caractérisé en ce que l'ordinateur est lié par l'intermédiaire d'un interface à un dispositif de commande d'un appareil d'interrogation (13), d'un projecteur ou d'un appareil photographique pour la reproduction de la micro-image d'un document, l'appareil d'interrogation, le projecteur ou l'appareil photographique présentant, en vue du positionnement de la pellicule rigide, un chariot de positionnement qui peut être commandé par des moteurs pas à pas qui peuvent être actionnés.

9. Dispositif selon la revendication 5, 6, 7 ou 8, caractérisé en ce que l'autre appareil photographique présente un objectif (21a) et un système d'illumination pour le filmage des titres et de l'identification, ainsi qu'un autre objectif (21) pour filmer l'image sur un moniteur (19), le moniteur (19) comportant un obturateur (19a), et un chariot (27) déplace automatiquement la pellicule rigide illuminée en position de reproduction du titre et de l'identification.

# FIG. 1

Host Computer 16

Massen-speicher Magnet-platte 14

optischer Massenspeicher 15

Massenspeicher Diskette 17

manuell Diskette

PC 18

V 24

PC DATENBANK

serielle Schnittstelle

13

automatisches Retrievalgerät

BARCODEDRUCKER mit Spender v. Barcode-Etiketten 2

20

1

Barcode Nr.,XY-Koordinate 9

3

6A

BARCODE-LASER

6

Scanner

Decoder

BELEGE 4

5

V24

DATENDRUCKER 11

MIKRO-FICHE-KAMERA-RECHNER

Barcode-Nr.

TERMINAL 10

FICHE-KARTEI 12

Index-Monitor 19

7

Verfilmungs-protokoll-drucker 8

EP 0 258 488 B1

Fig. 2

Beleg

Fig. 3